# EUROPEAN PATENT APPLICATION

(11) **EP 4 585 362 A1**
(43) Date of publication of application: **16.07.2025**
(21) Application number: 25151104.4
(22) Date of filing: 10.01.2025
(51) Int. Cl.: B23Q 1/38, B23Q 3/08, B25B 11/00, B28D 7/04

(54) **LOCKING DEVICE AND METHOD FOR PERFORMING RELATIVE POSITIONING BETWEEN A LOCKING DEVICE AND A SLAB-LIKE OBJECT**

(30) Priority: 10.01.2024 IT 202400000384
(71) Applicant: C.M.S. S.p.A., 24019 Zogno (BG) (IT)
(72) Inventor: GHISALBERTI, Oliviero, 24019 Zogno (BG) (IT)
(74) Representative: Luppi Intellectual Property S.r.l.

(57) **Abstract**

A locking device (1) is described for a horizontal machining centre (2) with three or more axes comprising: a locking member (3; 3'; 3"; 3‴) having a suction cup end (4; 5) for attaching to, and detaching from, a slab-like object (P, L) which may comprise a support surface (P) of the machining centre (2) and/or a slab (L) to be machined; suction means (6) operably connectable to the locking member (3; 3'; 3"; 3‴) for mutually engaging the suction cup end and the slab-like object; and air supply means (7) operably connectable to the locking member to release air from the suction end to mutually disengage the suction end and the slab-like object and permit relative air-cushioned movement and desired positioning between the locking member and the slab-like object; a method for performing relative positioning between a locking member and a slab-like object is also described.

## Description

### Background of the invention

The invention concerns a locking device suitable for installation in a horizontal machining centre with three or more axes, in particular in a CNC machining centre with three, or four, or five controlled axes, in particular in a contouring machine.

The invention can be used to perform relative positioning between a locking device and a slab-like object, and to perform locking between the locking device and the slab-like object.

Specifically, but not exclusively, the invention can be used to perform relative positioning between a locking member and a support surface of the machining centre, and to perform locking between the locking member and the support surface.

Specifically, but not exclusively, the invention can be used to perform relative positioning between a slab to be machined and a locking member, and to perform locking between the slab and the locking member.

The invention can be used for glass slabs, although it can be used for slabs made of other materials, such as, for example, stone materials such as marble, granite, sintered stone, etc., or synthetic materials.

It is known, in a horizontal machining center, to manually position one or more locking elements, commonly called "suction cups" because they are equipped with two suction cup ends, on a support surface of the machining center, so as to create a raised support for a slab to be machined.

It is also known to move and position the suction cups automatically on the support plane; however, this solution is only applied on expensive machines and involves structural and control complications.

Once the suction cups have been positioned, it is possible to lock them relative to the support plane by creating a vacuum at a lower end of the suction cup by suctioning air, and then position the slab to be machined on top of the suction cups.

It is also possible to lock the slab to be machined relative to the suction cup by creating a vacuum at the upper end of the suction cup by suctioning air.

A problem with the prior art is that the relative positioning between a slab-like object (which may include the slab to be machined and/or the support plane) and a locking suction cup may involve considerable weights, requiring considerable manual effort by the operator in charge of positioning.

In fact, locking suction cups are relatively heavy objects and their manual movement requires considerable effort by the operator in charge of positioning.

Furthermore, the support surface is raised above the floor on which the machining centre is installed, which makes the operator's movements uncomfortable and slow as the operator is forced to climb up and down from the support surface to position the suction cups.

A further disadvantage is that the support surface on which the suction cups are moved is located in an internal area of the machining centre; therefore, to allow the operator to perform the positioning safely (in compliance with safety regulations), it is necessary to disable the moving parts of the machine, thus lengthening the positioning times.

Furthermore, the slabs to be machined can reach considerable dimensions and therefore high weights and once positioned on the suction cups it can be difficult to move them horizontally, for example to reposition them following an initial incorrect positioning.

### Summary of the invention

An object of the invention is to solve one or more of the aforementioned limitations and drawbacks of the prior art.

An object is to provide a locking device and/or a method for performing relative positioning between a locking member and a slab-like object (in particular a support plane and/or a slab to be machined) that are alternatives to those of the prior art.

An object is to improve locking devices and methods for performing relative positioning between a locking member and a slab-like object (in particular a support plane and/or a slab to be machined) of a known type.

An advantage is to make available a locking device (in particular in a horizontal machining centre with three or more axes) that is constructively simple and economical.

An advantage is to allow relative positioning between a locking member and a slab-like object by an operator that is simple and ergonomic.

These objects and advantages, and others, are achieved by a device and/or a method according to one or more of the claims listed below.

### Brief description of the drawings

The invention may be better understood and implemented with reference to the attached drawings, which illustrate exemplary and non-limiting forms of implementation, in which:
Figure 1 is a perspective view of a machining centre in which a locking device made in accordance with the invention is used;
Figure 2 is a schematic view of a locking device according to the present invention having a locking member according to a first version;
Figure 3 is a perspective view of the locking member of Figure 2;
Figure 4 is a sectional view taken on a median plane passing through a longitudinal axis of the locking member of Figure 2;
Figure 5 is a bottom view of the locking member of Figure 2;
Figure 6 is a sectional view taken on a median plane passing through a longitudinal axis of a locking member according to a second version;
Figure 7 is a top view of the locking member of Figure 6;
Figure 8 is a sectional view taken along a median plane passing through a longitudinal axis of a locking member according to a third version;
Figure 9 is a sectional view taken along a median plane passing through a longitudinal axis of a locking member according to a fourth version;
Figure 10 is a perspective view of the locking member of Figure 9;
Figure 11 is a perspective view of a machining center in which a locking device made in accordance with the invention is used;
Figure 12 is an enlarged detail of Figure 11 showing a locking device according to the present invention;
Figure 13 is a bottom plan view of an interface element forming part of the locking device of Figure 12;
Figure 14 is section XIV-XIV of Figure 13.

### Detailed description

For simplicity and clarity of exposition, similar elements of different embodiments have been indicated with the same numbering.

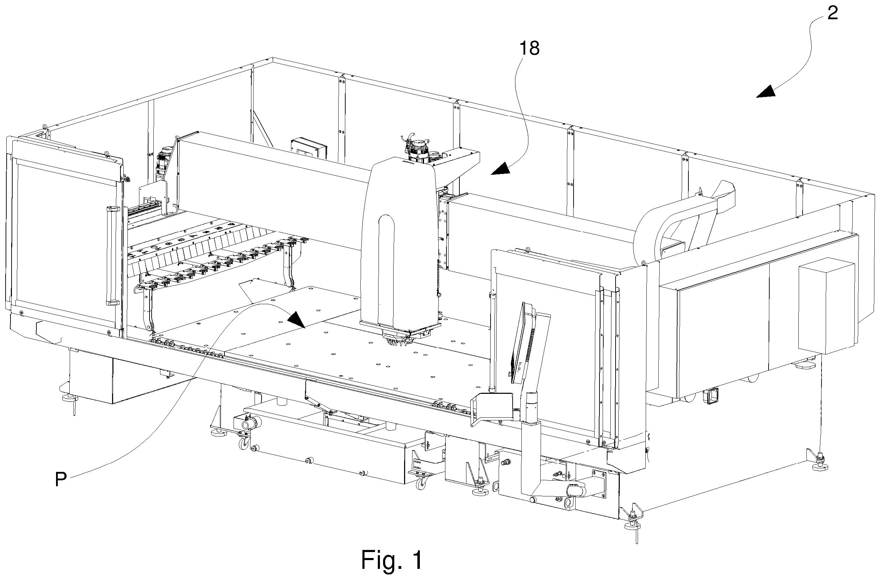

With reference to the figures mentioned above, a locking device 1 is disclosed as being used, in particular, in a machining centre 2 (CNC or numerical control) such as, for example, a horizontal machining centre, in particular in a contouring machine such as that in Figure 1.

The machining centre 2 may comprise a machining head 18 movable according to three or more axes (for example five controlled axes), a support plane P and the locking device 1 for the slab L to be machined, which will be described below.

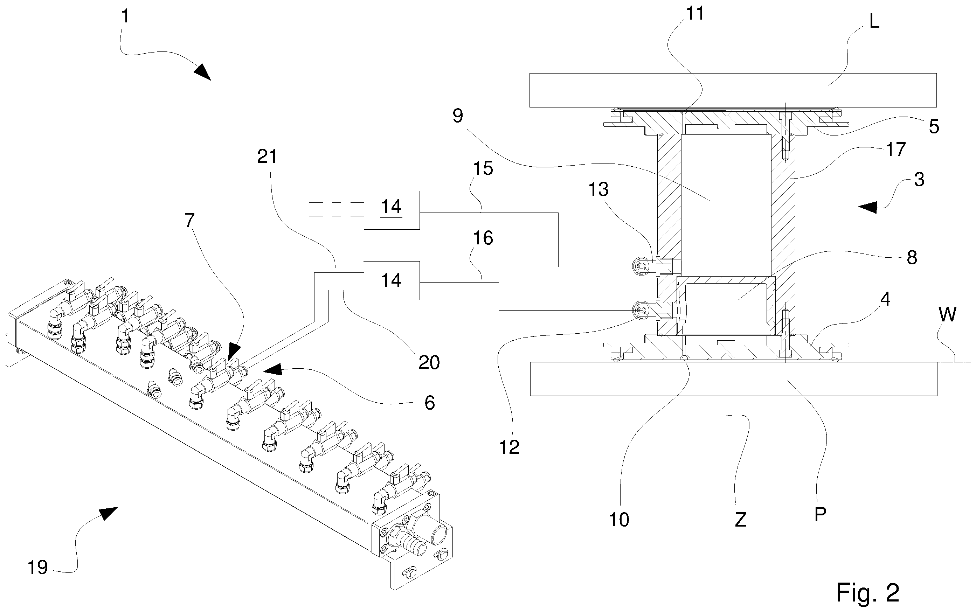

The locking device 1 can be used to perform the relative positioning between a locking member3, 3', 3", 3"' and a slab-like object P, L. The slab-like objectP, L comprises the support plane P (Figures 1 and 2) and/or the slab L to be machined in the machining centre 2.

The slab L comprises a slab of glass, or of other materials, such as, for example, stone materials such as marble, granite, sintered stone, etc., or synthetic materials.

The locking device 1 comprises, in particular, the at least one locking member 3, 3', 3", 3'" with at least one suction cup end 4, 5 configured to attach to the slab-like object P, L and detach from the slab-like object P, L.

The slab-like object P, L comprises, in particular, a flat surface portion. This flat surface portion may be smooth and air-impermeable (non-porous) so that it can be retained by the at least one suction cup end 4, 5 when a vacuum is applied.

The positioning device can be used to perform the relative positioning between the locking member 3, 3', 3", 3'" and a support plane P.

In addition, or alternatively, the positioning device can be used to perform the relative positioning between the slab L to be machined and the locking member 3, 3', 3", 3"'.

The figures illustrate four versions of the locking member 3, 3', 3", 3"', the differences of which will be described below.

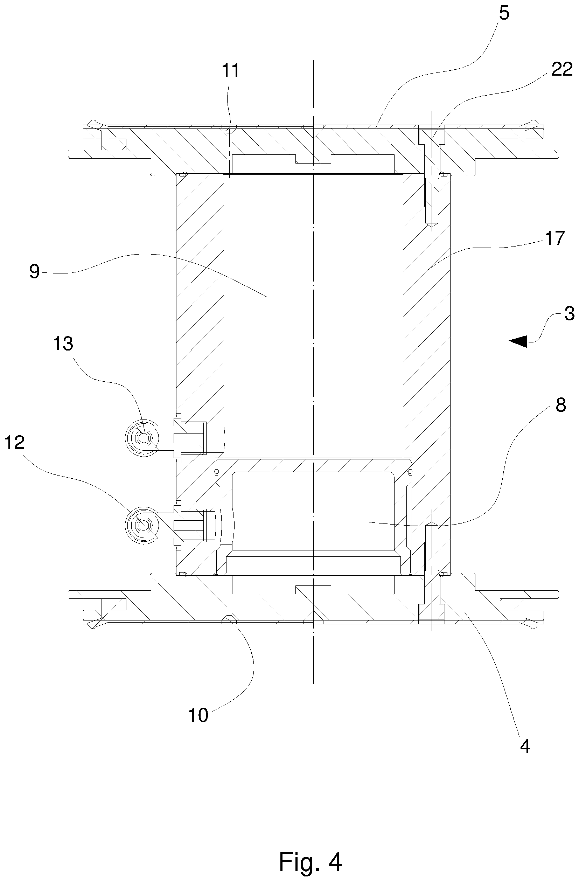

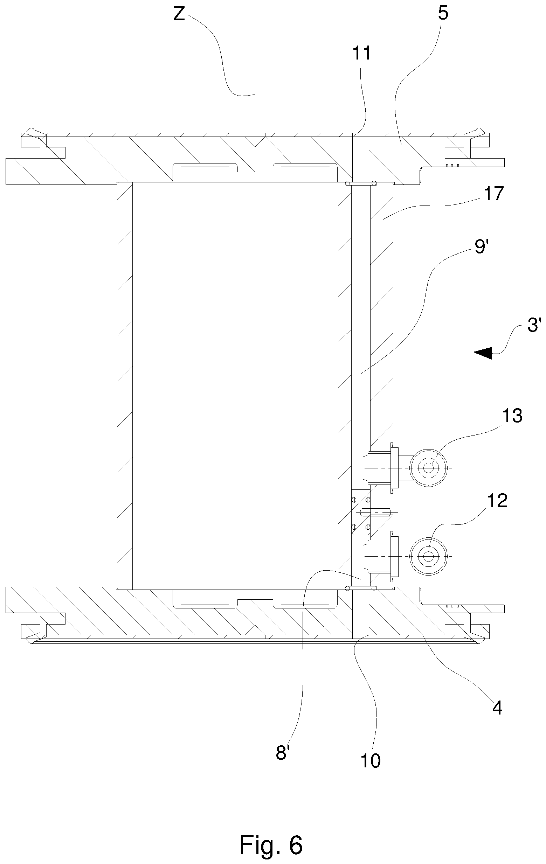

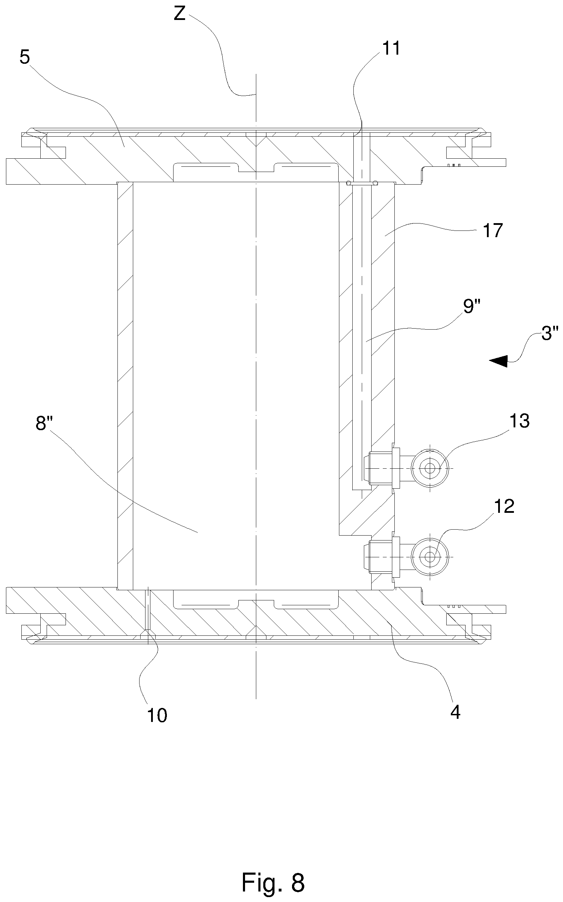

The first version of the locking member 3 (Figures 2, 3, 4 and 5) and/or the second version of the locking member 3' (Figure 6) and/or the third version of the locking member 3" (Figure 8) comprises (or comprise) a workpiece locking suction cup unit which is configured to lock - by vacuum - the slab L and to attach by vacuum to the support plane P. The workpiece locking suction cup unit is commonly called a "suction cup" since it is equipped with at least one suction cup end, in particular two opposite lower and upper suction cup ends 4, 5.

In other words, the locking member 3 (the workpiece locking suction cup unit) comprises, in particular, a lower suction cup end 4 which is intended to engage the support plane P and an upper suction cup end 5 which is intended to engage the workpiece or slab L.

The first version of the locking device 3, the second version of the locking device 3' and the third version of the locking device 3" differ from each other in the configuration of internal operating cavities and in the arrangement of holes, as will be described in greater detail below.

More locking devices 3, 3', 3" may be provided to be positioned according to a desired arrangement on the support plane P in such a number as to create a raised support plane for the slab L (based on the size and shape of the latter).

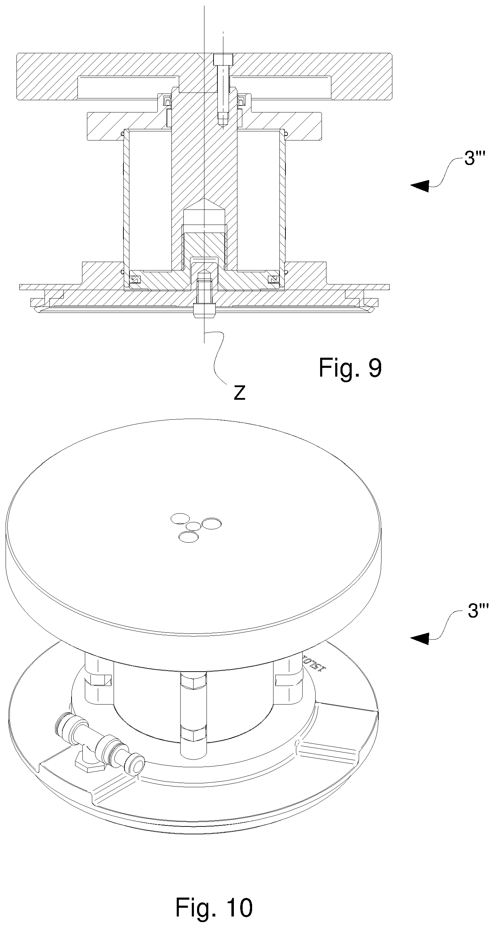

The fourth version of the locking member indicated by the numerical reference 3'" (Figures 9 and 10) comprises a reference stop which is configured, in particular, to attach by vacuum to the reference plane P and provide a reference feedback for the slab L. The reference stop performs, in particular, the function of a stop element to position the workpiece or slab L to be machined. The reference stop can be positioned (substantially like suction cups) by means of an air cushion and then (when the air supply to generate the cushion is interrupted) locked in position, for example by vacuum and/or by means of a screw pin (visible in the section of Figure 9) which fits into a hole previously made on the support plane P in a desired position. The reference stop comprises a movable member which is designed to contact the workpiece, and which is operated, raising or lowering it as needed, like a pneumatic cylinder.

The reference stop may comprise, in particular, three air passage ports, one for the activation of the air cushion and the vacuum and two for the respective movements of raising and lowering the movable contact member with the workpiece. It is possible to envisage embodiments with only one or two air passage ports in which, by means of switching valve, a single pneumatic supply source can be connected to the reference stop to activate the air cushion and/or the locking vacuum and/or the movement of the movable contact member.

For simplicity of description, reference will be made mainly to the first version of the locking member indicated with the numerical reference 3 (Figure 2).

As mentioned, the locking member 3 has at least one internal operating cavity 8, 9.

At least one hole 10, 11 is provided on each suction cup end 4, 5 in fluid communication with the operating cavity 8, 9.

In the first, second and third versions (workpiece-locking suction cup units) illustrated, there is an operating cavity 8 (in fluid communication with the hole(s) 10 arranged on the lower suction cup end 4) and a further operating cavity 9 (in fluid communication with the further hole(s) 11 arranged on the upper suction cup end 5).

In the fourth version (reference stop), only the operating chamber 8 associated with the lower suction cup end 4 is present.

The locking device 1 comprises suction means 6 (Figure 2) that may be operationally connected to the locking member 3 so as to mutually engage the suction cup end 4, 5 and the slab-like object P, L.

The suction means 6 may be connected to the operating cavity 8, 9 and configured, in particular, to suck air from the at least one hole 10, 11.

The suction means 6 may comprise a suction line connected to a vacuum pump (not illustrated). The suction line may be equipped with a plurality of suction connections arranged on a collector group 19, also called a "machine gun".

The locking device 1 comprises air supply means 7 (Figure 2) operably connectable to the locking member 3 to release air from the suction cup end 4, 5 so as to mutually disengage the suction cup end 4, 5 and the slab-like object P, L and allow a relative air-cushioned movement and a desired positioning between the locking member 3 and the slab-like object P, L.

The air supply means 7 may comprise a supply line connected to a compressor (not illustrated). The supply line may be equipped with a plurality of supply connections arranged on the manifold assembly 19 (Figure 2).

The air supply means 7 is operably connectable to the operating cavity 8, 9 and configured, in particular, to discharge a flow of air from the hole 10, 11.

The locking device 1 comprises, in particular, switching means 14 (Figure 2) configured, in particular, to selectively enable the suction means 6 and the air supply means 7. The switching means 14 may comprise a selector valve.

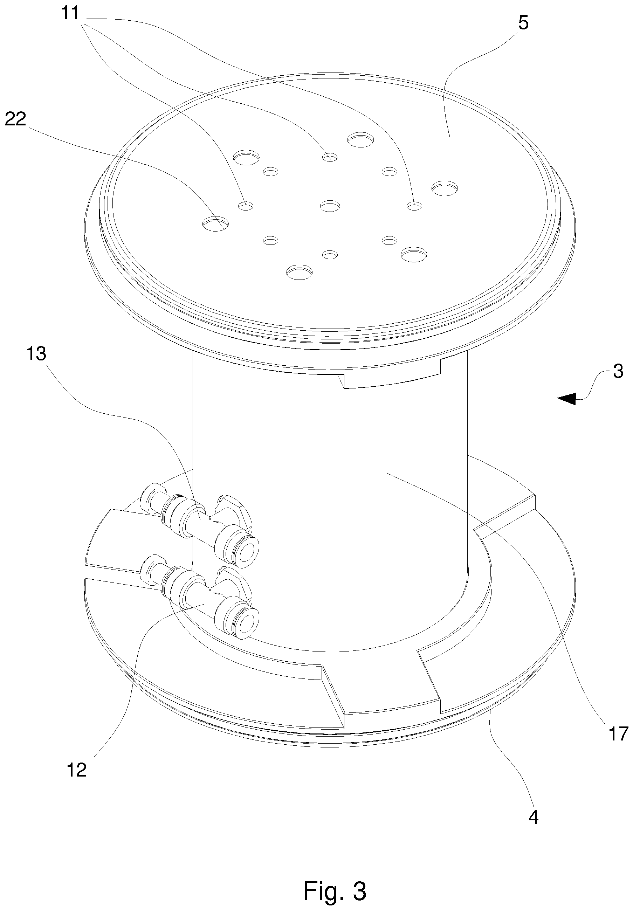

The locking member 3 may be provided with an air connection 12, 13 (Figures 2 and 3) for each operating cavity 8, 9.

The aforementioned switching means 14 may be connected to the respective air connection 12, 13 by means of a single flexible tube 15, 16 (Figure 2) which may thus be used for both air supply and suction.

In the versions illustrated in Figures 2-8, a first air connection 12 is provided in fluid connection with the operating cavity 8 and a second air connection 13 is provided in fluid connection with the further operating cavity 9. The first air connection 12 and the second air connection 13 are positioned in the lower part of the locking member 3, in the vicinity of the lower suction cup end 5.

The switching means 14 may be connected by means of tubular elements 20, 21 (Figure 2) respectively to the air supply means 7 and to the suction device 6.

In the version illustrated in Figure 2, switching means 14 is provided associated with the operating cavity 8 and switching means 14 associated with the further operating cavity 9.

In other words, in the locking devices 1 according to the first, second and third versions, the locking member 3 comprises two suction cup ends 4, 5 respectively connected to two operating cavities 8, 9 separated from each other; each of the two operating cavities 8, 9 is connected to respective switching means 14 so that the two suction cup ends 4, 5 can be operated independently to engage with the slab-like object P, L and disengage from the slab-like object P, L.

The locking member 3 extends along its own longitudinal axis Z.

At least three holes 10, 11 are provided, arranged on an operating plane W (Figure 2) of the suction cup end 4, 5. The operating plane W is transverse, in particular orthogonal, to the longitudinal axis Z. The operating plane W, in the operation of the locking device 1, is parallel to the flat surface portion of the slab-like object P, L.

The suction cup ends 4, 5 may have a discoidal structure with a deformable contact portion so that they can adhere, in use, to a flat surface.

The at least three holes 10, 11 may be equidistant angularly from the longitudinal axis Z.

The at least three holes 10, 11 may be positioned on the same circumference lying on the operating plane W.

In a version not illustrated, three holes may be provided on the lower suction cup end 4 which are equidistant 60° from each other.

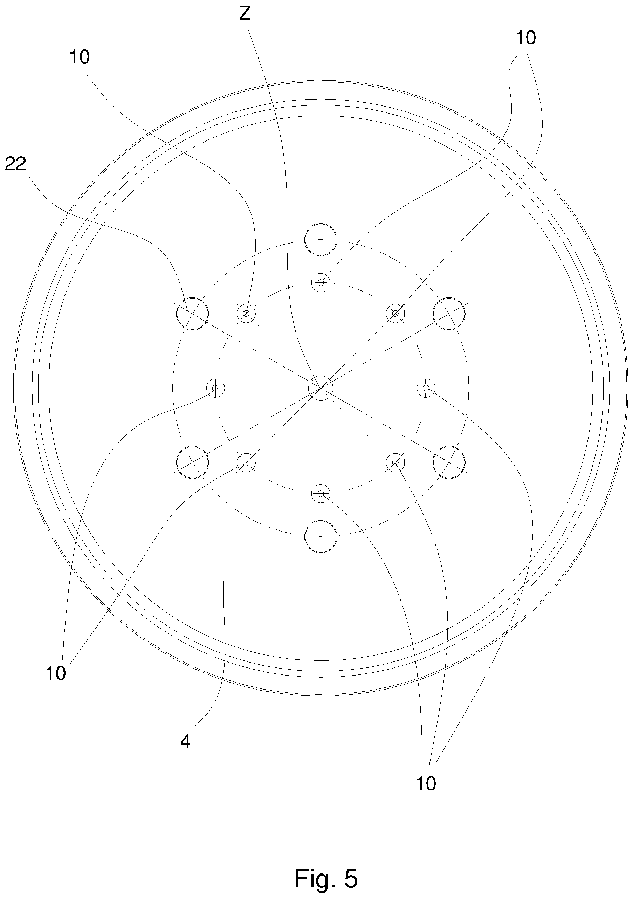

In the first version (Figures 1, 2, 3 and 5), the locking member 3 has eight holes 10 on the lower suction cup end 4 which are equidistant angularly from each other by 45° (as in Figure 5). In this first version, the upper suction cup end 5 also has eight additional holes 11 equidistant at 45° from each other (Figure 3).

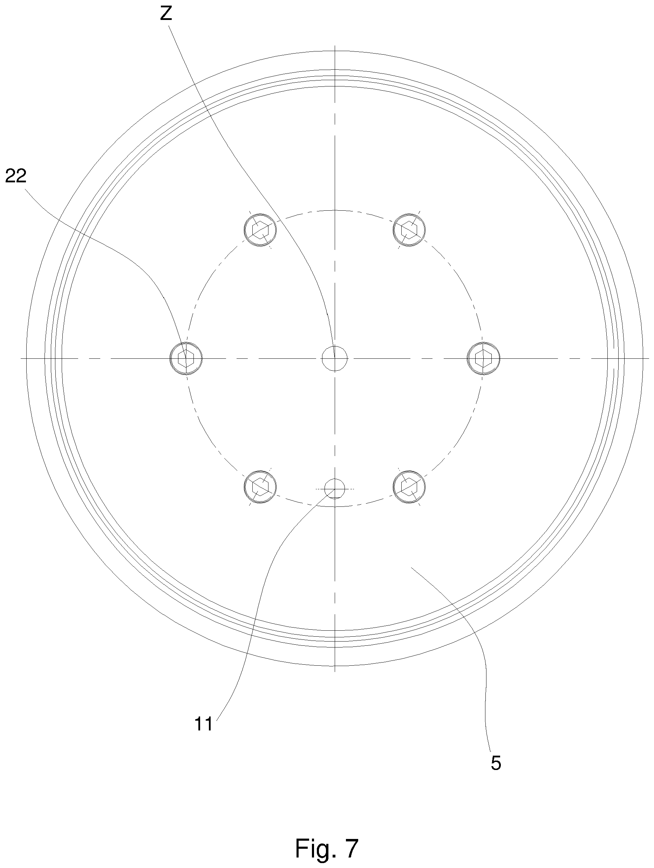

In the second version (Figure 6), the locking member 3" has a single hole 10 on the lower suction end 4 and a single additional hole 11 on the upper suction end 5 (Figure 7).

In the third version (Figure 8), the locking member 3" has eight holes 10 on the lower suction end 4 which are equidistant angularly by 45° from each other (as in Figure 5). In this third version, the locking member 3" has a single additional hole 11 on the upper suction end 5 (as in Figure 7).

The locking member 3 comprises, in particular, a tubular body 17 (Figures 2, 4, 6 and 8). This tubular body 17 is hollow and extends along the longitudinal axis Z.

The operating cavity 8, 9 is obtained internally to the tubular body 17.

In the first and third versions of the device 1, the eight holes 10 (and the eight additional holes 11) are positioned on the operating plane W so as to be closer to a wall of the hollow tubular body 17 than to the longitudinal axis Z.

In the first version of the device 1 illustrated in Figures 1, 2 and 3, the operating cavity 8 is obtained in the lower part of the locking member. In this first version, the additional operating cavity 9 is formed in the upper part of the locking member 3.

In the first version (Figures 2 and 3), the operating cavity 8 and the additional operating cavity 9 are both inside the hollow tubular body 17. The operating cavity 8 is defined by a cup-shaped body arranged in the hollow tubular body 17 adjacent to the lower suction end 4 so that a concave region of the cup-shaped body faces the lower suction end 4.

In this first version, the operating cavity 8 has a smaller volume than the additional operating cavity 9.

In a variant of the first version not illustrated, the operating cavity 8 may have a larger volume than the volume of the additional operating cavity 9.

In a further variant of the first version not illustrated, the operating cavity 8 may have a volume equal to the volume of the additional operating cavity 9.

In the first version (locking member 3) and in the third version (locking member 3") the operating cavity 8, 8" has the shape of a substantially cylindrical chamber.

In the second version of the locking device 1 (Figure 6), the operating cavity 8' of the locking member 3' is obtained in the wall of the tubular body 17. In this second version the operating cavity 8' includes a duct. In this second version, the additional operating cavity 9' is also obtained in the wall of the tubular body 17 and includes a further duct.

In the first version, the second version and the third version, the lower suction cup end 4 and the upper suction cup end 5 are arranged at the respective ends of the tubular body 17. In these illustrated versions, the lower suction cup end 4 and the upper suction cup end 5 are removably fixed to the ends of the tubular body 17 by means of fixing means 22 (Figures 3, 4, 5 and 7). The fixing means 22 comprise, in particular, one or more screws.

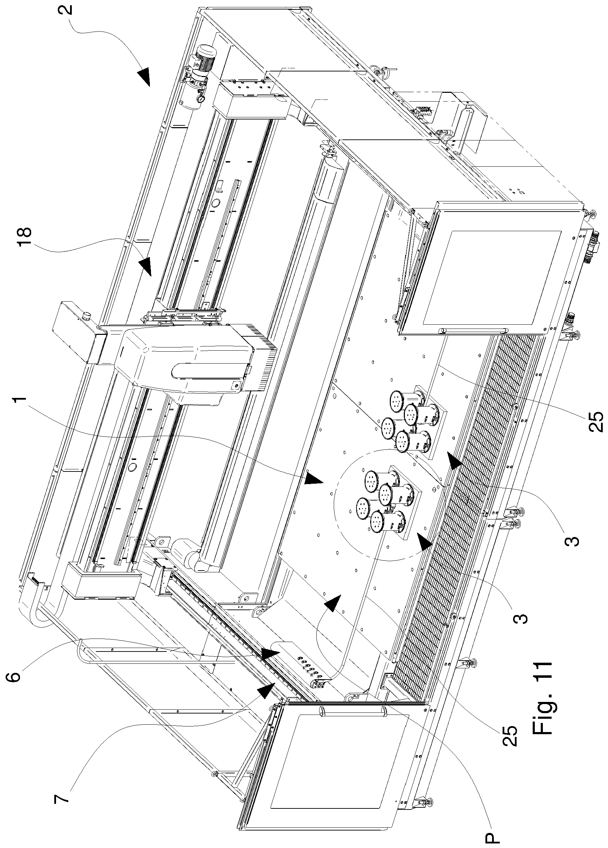

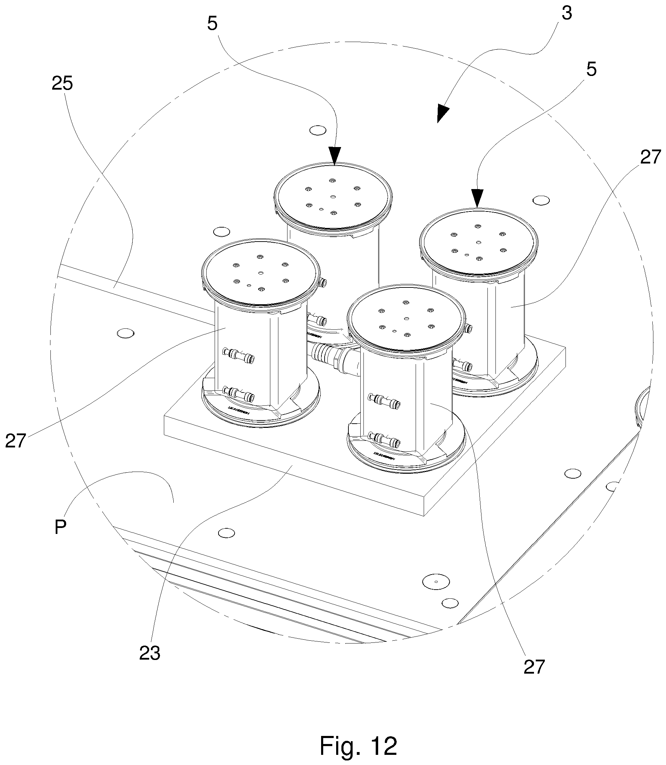

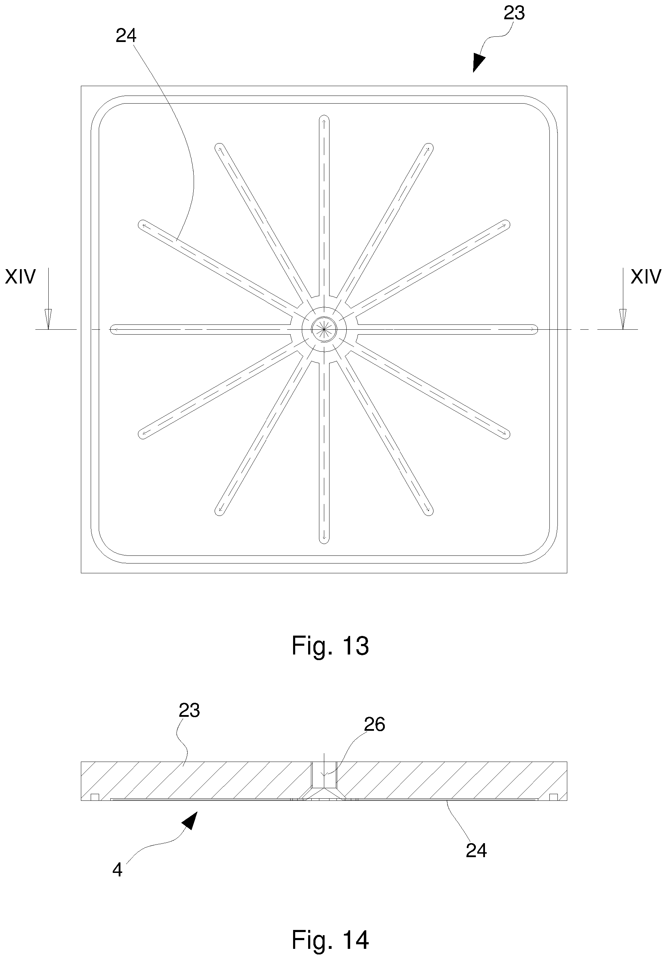

In the version of Figures 11-14, the locking device 1 comprises one, two, or more than two locking members 3, wherein each locking member 3 comprises an interface element 23 arranged on the support plane P. The interface element 23 may comprise, in particular, a plate-shaped element.

The interface element 23 is connected to the suction means 6 so that the interface element 23 can adhere to the support plane P by means of a negative pressure (suction). The interface element 23 is connected to the air supply means 7 so that the interface element 23 can float on the support plane P by means of a positive pressure (air cushion).

The interface element 23 may comprise, in particular, a lower surface provided with a channeling 24 configured for the distribution of negative pressure (vacuum) and positive pressure (pressurized air) to facilitate the engagement or disengagement of the interface element 23 with the support plane P. The channeling 24, for example, may be made using grooves. The channeling 24 may comprise, in particular, a series of radial channels arranged in a radial pattern. The channeling 24 may be connected, in particular, to a supply pipe 25 (flexible) by means of at least one duct 26 which is formed inside the interface element 23 and which opens onto an upper surface of the interface element 23. The supply pipe 25 is connected to the suction means 6 and/or to the air supply means 7.

Therefore, the interface element 23 comprises (on its lower surface) the lower suction cup end 4 which is intended to engage the support plane P and to generate the floating air cushion on the support plane P. The lower suction cup end 4 of the interface element 23 may be, in particular, substantially the same as the lower suction cup end 4 of the locking members described above.

The interface element 23 carries one, two, or more than two suction cup bodies 27, each of which comprises the upper suction cup end 5 which is intended to engage the workpiece or slab L and to generate the floating air cushion to facilitate the movement of the workpiece or slab L on the locking members 3.

Each suction cup body 27 may be designed to create the vacuum (and/or the air cushion) only on its upper face and may be placed on the interface element 23 (which is arranged between the support surface P and the suction cup body 27 and which also acts as a support element for the suction cup body 27), so that the assembly comprising the interface element 23 and the at least one suction cup body 27, depending on whether the air is conveyed to the lower suction cup end 4 (on the lower surface of the interface element 23) in delivery or in suction (positive or negative pressure) can become floating on, or adherent to, the support surface P.

It is possible to provide for the use of coupling means to fix each suction cup body 27 to the interface element 23, for example screw coupling means, tab coupling means, magnetic coupling means, shape coupling means (for example by means of interlocking recesses-protrusions, in particular by means of recesses that are obtained in the interface element 23 in which protrusions on the lower surface of the suction cup body 27 are inserted). The aforementioned coupling means is configured, in particular, to prevent a relative horizontal movement between the respective suction cup body 27 and the interface element 23.

In this example it is therefore possible to position one or more suction cup bodies 27, each of which can be connected to the suction means 6 and/or to the air supply means 7 (for example as described previously for the other embodiments) so that each upper suction cup end 5 can be operated to selectively create the vacuum or the air cushion.

Each interface element 23 may be made as a modular element, with the possibility of constructing a locking device 1 by joining two or more interface elements 23 together. This allows the dimensions and/or shape and/or arrangement of the various locking members 3 to be varied, depending on how the arrangement and mutual joining of the various interface elements 23 is performed, in such a way as to adapt the configuration of the locking device 1 to the processing requirements.

In the example of Figures 11-14, as in the previous examples, each locking member 3 may comprise, in particular, at least one lower suction cup end 4 for coupling (with negative pressure or with positive pressure) with the support surface P, and at least one upper suction cup end 5 for coupling (with negative pressure or with positive pressure) with the workpiece.

In the example of Figures 11-14, thanks to the arrangement of an interface element 23, each locking member 3 may be made in such a way that the number of lower suction cup ends 4 can be different from the number of upper suction cup ends 5. For example, it is possible that, to a single lower suction cup end 4, two or more upper suction cup ends 5 can be associated.

In the illustrated example, each locking member 3 comprises a lower suction cup end 4 and four upper suction cup ends 5, even if it is possible to provide a different number of lower suction cup ends 4 and/or a different number of upper suction cup ends 5.

A method for performing a relative positioning between a locking member 3 and a slab-like object P, L in a horizontal machining centre 2 with three or more axes is described below.

The method comprises the steps of:
a. providing at least one locking member 3 with a suction cup end 4, 5;
b. mutually engaging the suction cup end 4, 5 and the slab-like object P, L;
c. supplying air to the locking member 3 so as to mutually disengage the suction cup end 4, 5 from the slab-like object P, L;
d. during the supply of air, performing a relative air cushion movement between the locking member 3 and the slab-like object P, L;
e. performing a desired positioning between the locking member 3 and the slab-like object P, L;
f. sucking air from the locking member 3 so as to mutually engage the suction cup end 4, 5 and the slab-like object P, L while maintaining the desired positioning.

According to one operating mode, an operator may position the locking members 3 on the support plane P of the machining center 2. The operator may position such locking members 3 near an edge of the support plane P without having to climb onto the support plane P.

Once the locking members 3 are arranged on the support plane P with their lower suction cup end 4 in contact with the support plane P and with their upper suction cup end 5 facing upwards, it is possible to operate the switching means 14 associated with the operating cavity 8 to enable the air supply means 7 and supply air to the operating cavity 8 and therefore to the holes 10.

In other words, once the locking member 3 is resting on the support plane P - via the switching means 14 - it is possible to allow a fluid connection between the air supply means 7, the tubular body 21, the flexible tube 16, the operating cavity 8 and the holes 10 (Figure 2).

The air, coming out of the holes 10, lifts (in a longitudinal direction, vertically) the locking member 3 on an air bearing, thus eliminating the contact, and therefore the friction component, between the lower suction cup end 4 and the support surface P.

At this point, the operator can manually move (or with the aid of an extension or pliers) the locking member 3 until it reaches a desired position.

Once the locking member 3 has reached the desired position on the support surface P, it is possible to operate the switching means 14 again to cut off the air supply from the operating cavity 8 (and therefore from the holes 10) so that the locking member 3 returns to rest on the operating surface P.

At this point, it is possible to operate the switching means 14 associated with the operating cavity 8 so as to create a fluid connection between the suction means 6 and the operating cavity 8 (and therefore the holes 10) and generate a vacuum between the lower suction cup end 4 and the support surface P to lock the locking member 3 on the support surface P.

The operator can repeat the steps described above for positioning the other locking members 3 to then allow the slab L to be machined on to rest on the respective upper suction cup ends 5 of the plurality of locking members 3.

Once positioned the slab L to be machined resting on the locking members 3, it is possible to operate the switching means 14 associated with the additional operating cavity 9 to enable the suction of air from the additional operating cavity 9 (and therefore from the additional holes 11) so as to create a depression between the upper suction cup end 5 and the slab L to be machined to block the latter with respect to the locking member 3.

According to a further additional or alternative operating mode, once the slab L has been positioned (rested) on the locking members 3 (or equivalently on the respective suction cup ends 5), it is possible to supply air by means of the air supply means 7 to the additional operating cavity 9 so that it comes out of the additional holes 11 creating an air cushion and moving the slab L away from the suction cup end 5.

Once the slab L has been lifted, having eliminated the contact and therefore the friction component between the locking member 3 and the slab L, it is possible to move (e.g. manually) the slab L horizontally to reposition it. When the slab L has been repositioned, it is possible - by means of the switching means 14 associated with the operating cavity 9 - to create a vacuum between the suction cup end 5 and the slab L to block the slab L with respect to the locking member 3.

The particular configuration of the locking member 3 and of the air supply means 7 such as to let air escape from the holes 10 provided on the suction cup end 4 (lower) allows the suction cup end 4 to be disengaged from the support plane P, facilitating the air cushion movement of the locking member 3 and the desired positioning of the latter on the support plane P. In fact, thanks to the air cushion an operator can move the relatively heavy locking member 3 with minimal effort with just one hand (possibly with the help of an extension or pliers), without the need to climb onto the support plane P to lift and move them using both hands as in the known art.

The particular configuration of the locking device 3 and of the air supply means 7 such as to allow air to escape from the additional holes 11 provided on the suction cup end 5 (upper) allows the slab L to be released from the suction cup end 5, facilitating the relative movement of the slab L on an air cushion and the desired positioning of the latter with respect to the locking device 3. In this way the operator can move a relatively heavy slab L horizontally with minimal effort (i.e., less than that which would have been made if the slab L were resting in contact with the locking devices 3).

The conformation of the at least one operating cavity 8, 9 inside the locking member 3 defines a plenum or lung such as to stabilize and make uniform the pressure inside the operating cavity 8, 9. The provision of a plenum allows, in the case where more holes 10 are provided (or more additional holes 11), to have uniform outgoing air flows between them and therefore to create a thrust towards the slab-like object P, L which is also uniform.

The particular arrangement of the at least three holes 10 (in particular the eight holes 10), together with the provision of the plenum defined by the operating cavity 8, allows for a balanced thrust on the support plane P, avoiding the overturning of the locking device 3.

The configuration of the switching means 14 to selectively enable the air supply and suction allows the use of a single flexible tube for each operating cavity 8, 9.

The shape of the locking device 3 with double suction cup ends 4, 5 and the independent enabling of the operating cavity 8 and the additional operating cavity 9 allows the locking device 1 to be used according to different and versatile modes of use, selectively locking and unlocking the locking device 3 both with respect to the support plane P and with respect to the slab L to be machined.

From the above, it is evident that the locking device and the method for performing a relative positioning between a locking member and a slab-like object successfully achieve all the previously mentioned intended purposes.

What has been described and shown in the attached drawings has been provided for illustrative purposes of the innovative features of the locking device 1.

Variations and/or additions to what has been described and illustrated in the attached drawings are possible.

## Claims

1. Locking device (1) suitable for installation in a horizontal machining center (2) with three or more axes, comprising:
• at least one locking member (3; 3'; 3"; 3"') with at least one suction cup end (4, 5) configured to attach to, and detach from, a slab-like object (P, L), said slab-like object (P, L) comprising a support surface (P) of said machining center (2); said slab-like object (P, L) comprising, in particular, a slab (L) to be machined in said machining center (2);
• suction means (6) operably connectable to said at least one locking member (3; 3'; 3"; 3"') so as to mutually engage said suction cup end (4, 5) and said slab-like object (P, L);
• air supply means (7) operably connectable to said at least one locking member (3; 3'; 3"; 3"') to let air escape from said suction cup end (4, 5) so as to disengage mutually said suction cup end (4, 5) and said slab-like object (P, L) and allow a relative movement with an air cushion and a desired positioning between said locking member (3; 3'; 3"; 3"') and said slab-like object (P, L).

2. Locking device (1) according to claim 1, wherein said locking member (3; 3'; 3"; 3"') internally has at least one operating cavity (8, 8', 8"; 9, 9', 9"), on each suction cup end (4, 5) at least one hole (10, 11) being made in fluid communication with said operating cavity (8, 8', 8"; 9, 9', 9").

3. Locking device (1) according to claim 2, wherein said suction means (6) is connectable to said operating cavity (8, 8', 8"; 9, 9', 9") and configured to suck air from said at least one hole (10, 11) and wherein said air supply means (7) is operatively connectable to said operating cavity (8, 8', 8"; 9, 9', 9") and configured to allow a flow of air to escape from said at least one hole (10, 11).

4. Locking device (1) according to any one of the preceding claims, comprising switching means (14) configured to selectively activate said suction means (6) and said air supply means (7).

5. Locking device (1) according to claim 4, wherein said locking member (3; 3'; 3"; 3"') is provided with an air connection (12, 13), said switching means (14) being connected to said air connection (12, 13) via a single flexible tube (15, 16) which can thus be used both for air supply and for suction.

6. Locking device (1) according to any one of the preceding claims, wherein said locking member (3; 3'; 3") comprises two suction cup ends (4, 5) which are a lower suction cup end (4) configured to attach to, and detach from, said support plane (P) of said machining centre (2), and an upper suction cup end (5) configured to attach to, and detach from, a slab (L) to be machined in said machining centre (2).

7. Locking device (1) according to claim 6, wherein said two suction cup ends (4, 5) are respectively connected to two operating cavities (8, 8', 8"; 9, 9', 9") separated from each other, each of said two operating cavities (8, 8', 8"; 9, 9', 9" ) being connected to respective switching means (14) so that said two suction cup ends (4, 5) can be operated independently to engage with, and disengage from, said slab-like object (P, L).

8. Locking device (1) according to any one of the preceding claims, wherein said locking member (3; 3'; 3"; 3"') extends along its own longitudinal axis (Z), and wherein at least three holes (10) are provided arranged on an operating plane (W) of said suction cup end (4, 5), said operating plane (W) being transverse to said longitudinal axis (Z).

9. Locking device (1) according to claim 8, wherein said at least three holes (10, 11) are angularly equidistant with respect to said longitudinal axis (Z).

10. Locking device (1) according to claim 8 or 9, wherein said locking member (3; 3'; 3"; 3"') comprises a tubular body (17) inside which at least one operating cavity (8, 8', 8"; 9, 9', 9") is obtained, and wherein said at least three holes (10, 11) are positioned on said operating plane (W) so as to be closer to a wall of said tubular body (17) than to said longitudinal axis (Z); one of said operating cavities (8, 8', 8"; 9, 9', 9") comprising, in particular, a duct (8', 9') obtained internally to said wall of said tubular body (17).

11. Locking device (1) according to any one of the preceding claims, wherein said at least one locking member (3; 3'; 3"; 3"') comprises: a locking-piece suction cup unit (3; 3'; 3") configured to block a slab (L) by depression and to attach by depression to said support surface (P); and/or a reference stop (3'") configured to attach by depression to said support surface (P) and to provide a reference abutment for said slab (L).

12. Locking device (1) according to any one of the preceding claims, comprising a plurality of locking members (3; 3'; 3"; 3'"), each locking member of said plurality of locking members being made as said at least one locking member (3; 3'; 3"; 3'").

13. Locking device (1) according to any one of the preceding claims, wherein said locking member (3) comprises an interface element (23) and one or more suction cup bodies (27) arranged on said interface element (23), said interface element (23) comprising a lower suction cup end (4) configured to attach to, and detach from, said support plane (P) of said machining centre (2), each of said one or more suction cup bodies (27) comprising an upper suction cup end (5) configured to attach to, and detach from, a slab (L) to be machined in said machining centre (2).

14. Horizontal machining center (2) for machining a slab (L), said machining center (2) comprising: a machining head (18) movable according to three or more axes, a support surface (P) suitable to support said slab (L), and a locking device (1) including:
• at least one locking member (3; 3'; 3"; 3"') with at least one suction cup end (4, 5) configured to attach to, and detach from, a slab-like object (P, L), said slab-like object including said support surface (P); said slab-like object including, in particular, said slab (L) to be machined;
• suction means (6) operably connectable to said at least one locking member (3; 3'; 3"; 3"') so as to mutually engage said suction cup end (4, 5) and said slab-like object (P, L);
• air supply means (7) operably connectable to said at least one locking member (3; 3'; 3"; 3") to let air escape from said suction cup end (4, 5) so as to mutually disengage said suction cup end (4, 5) and said slab-like object (P, L) and allow a relative movement with an air cushion and a desired positioning between said locking member (3; 3'; 3"; 3") and said slab-like object (P, L).

15. Method for performing a relative positioning between a locking member (3; 3'; 3"; 3") and a slab-like object (P, L) in a horizontal machining center (2) with three or more axes, wherein said slab-like object (P, L) includes a support surface (P) of said machining center (2); said slab-like object (P, L) including, in particular, a slab to be machined (L) in said machining center (2); the method including the following steps:
• providing at least one locking member (3; 3'; 3"; 3") with at least one suction cup end (4, 5);
• mutually engaging said suction cup end (4, 5) and said slab-like object (P, L);
• supplying air to said locking member (3; 3'; 3"; 3") so as to mutually disengage said suction cup end (4, 5) from said slab-like object (P, L);
• during said air supplying, performing a relative movement with an air cushion between said locking member (3; 3'; 3"; 3") and said slab-like object (P, L);
• performing a desired positioning between said locking member (3; 3'; 3"; 3") and said slab-like object (P, L);
• sucking air from said locking member (3; 3'; 3"; 3 ") so as to mutually engage said suction cup end (4, 5) and said slab-like object (P, L) maintaining said desired positioning.
